# EUROPÄISCHE PATENTANMELDUNG

(11) **EP 0 982 181 A2**
(43) Veröffentlichungstag der Anmeldung: **01.03.2000**
(21) Anmeldenummer: 99115567.2
(22) Anmeldetag: 06.08.1999
(51) Int. Cl.: B60N 2/28

(54) **Adapter für einen Auto-Kindersitz**

(30) Priorität: 21.08.1998 DE 29814969 U
(71) Anmelder: BRITAX-TEUTONIA KINDERWAGENFABRIK GmbH, D-32120 Hiddenhausen (DE)
(72) Erfinder: Götting, Bernd, 32130 Enger (DE)
(74) Vertreter: Specht, Peter, Dipl.-Phys.

(57) **Zusammenfassung**

Ein Adapter für einen Auto-Kindersitz, der wahlweise im Auto und auch außerhalb eines Kraftfahrzeuges verwendet werden kann, soll so gestaltet werden, daß er für eine vielfältige Kombination von Kinderwagen-Fahrgestellen und Kinderautositzen verwendet werden kann.

Erfindungsgemäß sind am Adapter (16) Stützelemente (18, 19) für den Auto-Kindersitz angeordnet. Die Stützelemente (18, 19) werden durch Sicherungselemente (26) an den Adapter gepreßt. Der Adapter (16) besteht im wesentlichen aus zwei Seitenteilen (17), die durch zwei Querstangen (18) miteinander verbunden sind. Der Auto-Kindersitz stützt sich mit seiner Unterseite auf den beiden Querstangen (18, 19) ab. Durch die Sicherungselemente kann er nicht umkippen.

Der Adapter ist besonders für einen Sportwagen oder einen Buggy geeignet.

## Beschreibung

Die Erfindung betrifft einen Adapter für einen Auto-Kindersitz zur wahlweisen Verwendung des Auto-Kindersitzes außerhalb eines Kraftfahrzeuges.

Der in Frage kommende Adapter ist besonders für einen Sportwagen oder einen Buggy geeignet. Üblicherweise sind Kinderwagen mit einem Sitz- oder Liegeeinsatz ausgestattet, der abnehmbar am Untergestell festgelegt ist. Der Sitz- oder Liegeeinsatz wird vom Untergestell getrennt, wenn beispielsweise bei einer Fahrt mit einem Pkw das Untergestell im zusammengeklappten Zustand mitgenommen werden soll. Es ist jedoch aufgrund einer gesetzlichen Regelung vorgeschrieben, daß Kinder in einem Pkw nur in geeigneten Auto-Kindersitzen mitfahren dürfen. Nach Beendigung der Fahrt ist es dann erforderlich, nach dem Aufstellen des Kinderwagen-Fahrgestelles den Sitz oder Liegeeinsatz auf dem Untergestell aufzusetzen. Der Platzbedarf für das Kinderwagen-Fahrgestell ist jedoch im zusammengeklappten Zustand relativ gering, während der Sitz- und Liegeeinsatz recht sperrig ist. Aufgrund der gesetzlichen Bestimmungen ist es jedoch nicht zulässig, ein Kind während der Fahrt in einem Pkw in dem Sitz- und Liegeeinsatz mitzunehmen, außer beim Einsatz von Spezialausführungen oder mit Zusatzeinrichtungen. Bei einer Fahrt sind demzufolge der Auto-Kindersitz und der Sitz- und Liegeeinsatz notwendig. Bei vielen Anlässen, beispielsweise bei einem sich der Autofahrt anschließenden Spaziergang, könnte jedoch das Kind in dem Auto-Kindersitz verbleiben. Der Auto-Kindersitz müßte dann jedoch getragen werden. Dieses wäre jedoch eine Belastung, die nicht gewollt ist.

Damit auf die Mitnahme des Sitz- und Liegeeinsatzes verzichtet werden kann, ist es bekannt, den Auto-Kindersitz auf das Fahrgestell eines Kinderwagens aufzusetzen. Dazu sind jedoch typabhängige Adapter notwendig, um einen ganz bestimmten Auto-Kindersitz auf ein bestimmtes Kinderwagen-Fahrgestell aufzusetzen. Da sowohl die Auto-Kindersitze als auch die Kinderwagen nach ganz bestimmten Kriterien vom Benutzer ausgesucht werden, ist die gewünschte Kopplung eines Auto-Kindersitzes mit einem Kinderwagen-Fahrgestell oft nicht möglich. Wenn diese Möglichkeit geschaffen werden müßte, kommt es zu einer Typenvielfalt von Adaptern.

Der Erfindung liegt die Aufgabe zugrunde, einen Adapter der eingangs näher beschriebenen Art so zu gestalten, daß er für eine vielfältige Kombination von Kinderwagen-Fahrgestellen und Kinderautositzen verwendet werden kann. Die gestellte Aufgabe wird durch am Adapter angeordnete Stützelemente für den Auto-Kindersitz und durch Sicherungselemente zum Anpressen des Auto-Kindersitzes gegen die Stützelemente gelöst.

Der Adapter ist nunmehr so gestaltet, daß er eine Vielzahl von Auto-Kindersitzen aufnehmen kann. Dies ist insbesondere durch die Stützelemente möglich, auf die sich der Auto-Kindersitz mit seiner Unterseite derart abstützt, daß er außerdem gegen Kippen gesichert ist. Durch die Sicherungselemente wird der Auto-Kindersitz mit einer relativ großen Kraft gegen die Stützelemente gedrückt, so daß er während einer Fahrt mit dem Kinderwagen ausreichend gesichert ist. Als Kinderwagen kommt besonders ein Sportwagen oder ein Buggy in Betracht. Die Stützelemente können verschiedenartig gestaltet sein. Besonders vorteilhaft ist jedoch, wenn dazu der Adapter aus zwei Seitenteilen und mindestens zwei diese verbindende Querstangen besteht. Die Querstangen wirken dann sinngemäß wie eine Zweipunktauflage. Besonders zweckmäßig ist es, wenn die Seitenteile an der oberen Seite bogenförmige Ausnehmungen und die Sicherungselemente Schnellspannverschlüsse sind. Durch die bogenförmige Gestaltung wird noch eine zusätzliche Sicherheit für den aufgesetzten Auto-Kindersitz erreicht. Durch die Verwendung von Schnellspannverschlüssen als Sicherungselemente kann das Aufsetzen und das Abnehmen des Auto-Kindersitzes ohne Werkzeuge in kürzester Zeit erfolgen.

Die Sicherungselemente können verschiedenartig ausgestaltet sein. Sie müssen jedoch so gestaltet sein, daß sie sich nicht lösen, beispielsweise beim Fahren durch ein Schlagloch oder durch Bewegungen des Kindes. Der Adapter läßt sich einfach herstellen und ist so ausgestattet, daß er an den normalen Verriegelungsleisten eines Kinderwagengestells festgelegt werden kann, so daß nach Abnahme des Adapters der normale Kinderwagenaufsatz auf das Kinderwagen-Fahrgestell aufgesetzt werden kann. Bei einem Kinderwagen-Fahrgestell für ein Kind ist dieses mit einem Adapter ausgerüstet. Bei einem Kinderwagen-Fahrwerk für zwei Kinder, die beispielsweise nebeneinander oder hintereinander sitzend gefahren werden, ist das Kinderwagen-Fahrwerk mit einer entsprechenden Anzahl von Adaptern ausgerüstet. Sofern die Kinder nebeneinander sitzend gefahren werden, können zwei Adapter nebeneinander angeordnet werden, oder es kann eine kombinierte Baueinheit gebildet werden.

Die Schnellspannverschlüsse sind in bevorzugter Ausführung Spanngurte, die mit einem allgemein bekannten Spannverschluß versehen sind. Damit die Spannelemente nicht am Untergestell des Kinderwagen-Fahrwerks verbleiben, wenn der Adapter entfernt wird, ist vorgesehen, daß diese am Adapter festgelegt sind.

Zum Schutz des Kindes ist in weiterer Ausgestaltung vorgesehen, daß der Adapter mit Aufnahmen für ein klappbares Verdeck, für einen Sonnen- oder einen Windschutz oder dergleichen ausgestattet ist. Diese Aufnahmen sind vorzugsweise an den Seitenteilen des Adapters angeordnet. In diese Aufnahmen können dann ein Verdeck und dgl. eingesteckt und gesichert werden.

Der Adapter muß nicht nur zur Aufnahme eines Auto-Kindersitzes an einem Kinderwagen-Fahrgestell verwendet werden, sondern könnte beispielsweise auch verwendet werden, um den Auto-Kindersitz auf einen Einkaufswagen, auf den Gepäckträger eines Fahrrades, auf einem Fahrradanhänger oder sonstige geeignete Fahrzeuge aufzusetzen. Die Anwendungsfälle sind daher sehr vielfältig.

Anhand der beiliegenden Zeichnungen wird die Erfindung noch näher erläutert.

Es zeigen:
- **Figur 1**: eine Ausführung eines Kinderwagen-Fahrwerkes in einer Seitenansicht zur Aufnahme des Adapters und eines Auto-Kindersitzes;
- **Figur 2**: Adapter in perspektivischer Darstellung in einer bevorzugten Ausführung und

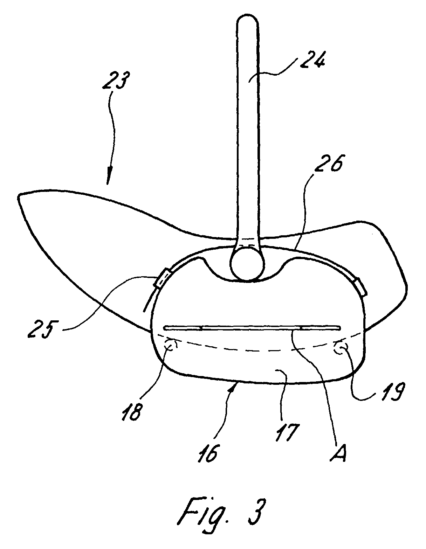

- **Figur 3**: die Aufnahme des Kinderautositzes durch den Adapter, rein schematisch.

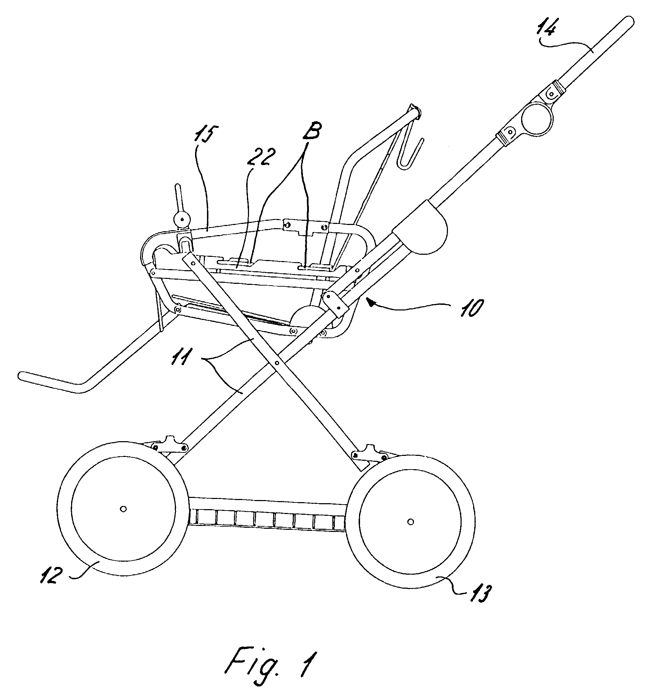

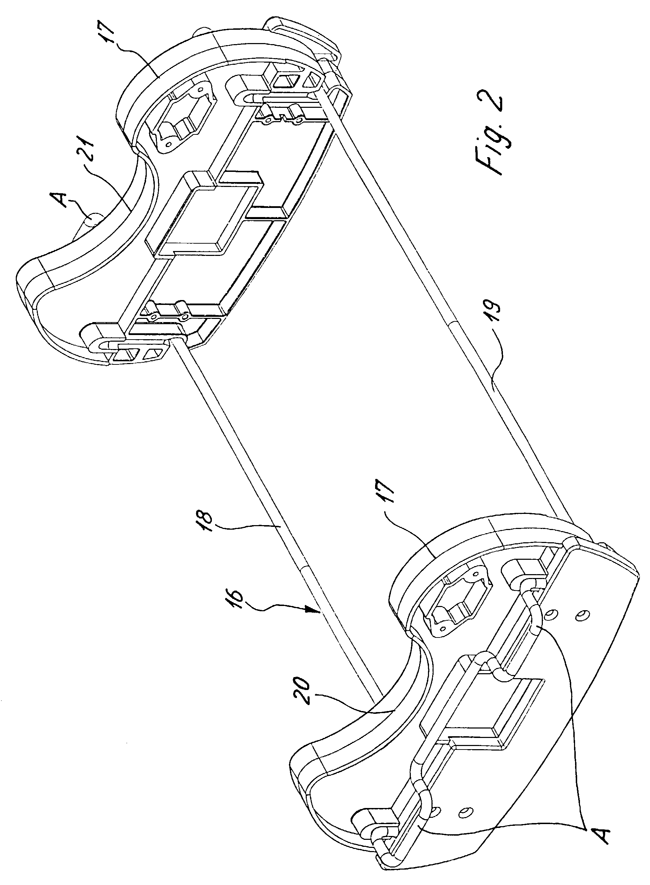

Das in der Figur 1 dargestellte Kinderwagen-Fahrgestell 10 ist das Fahrgestell eines Sportwagens. Es besteht im wesentlichen aus einem zusammenklappbaren Untergestell 11, an dem die Vorderräder 12 und die Hinterräder 13 gelagert sind. Das Untergestell 11 besteht aus zwei seitlichen Scheren, die aus jeweils zwei Holmen gebildet sind. An einem Holm ist im dargestellten Ausführungsbeispiel ein U-förmiger Schiebebügel 14 angeordnet. Anstelle des U-förmigen Schiebebügels könnte das Kinderwagen-Fahrgestell 10 auch mit zwei Griffen ausgerüstet sein, die an verlängerten Holmen des Untergestells angeordnet sind. Am Untergestell 11 sind zwei Halteschienen 22 angeordnet. Zwischen diesen Halteschienen 22 und den seitlichen Rahmen 15 des Fahrgestells 10 liegt der in der Figur 2 dargestellte Adapter 16, der im wesentlichen aus zwei Seitenteilen 17 und zwei Querstangen 18, 19 besteht. Die Seitenteile 17 sind plattenförmig ausgebildet. An der oberen, den Radachsen abgewandt liegenden Seiten ist jedes Seitenteil 17 mit bogenförmig verlaufenden Ausnehmungen 20, 21 versehen, die eine Aufnahme für einen Auto-Kindersitz 23 bilden. Dieser Auto-Kindersitz hat beispielsweise einen U-förmigen Tragebügel 24, der an der unteren Seite eine entsprechende Rundung aufweist. An den Seitenteilen 17 sind mit Spannschlössern 25 versehene Spanngurte 26 festgelegt. Diese werden um einen Zapfen des Auto-Kindersitzes 24 gezogen, um ihn eindeutig zu sichern. Die beiden Querstangen 18, 19 verhindern dabei, daß der Auto-Kindersitz sich drehen kann bzw. kippt, da er sich daran abstützt. Der Adapter 16 wird in der üblichen Weise an den Halteschienen 22 des Untergestells 11 festgelegt. In nicht näher dargestellter Weise ist der Adapter 16 mit Taschen oder sonstigen Aufnahmen für ein klappbares Verdeck, einen Sonnenschirm oder einem Windschutz versehen. Der Adapter soll möglichst leicht sein. Deshalb sind die Seitenteile 17 beispielsweise aus Kunststoff oder einem Leichtmetall, wie z.B. Aluminium, gefertigt. Anstelle der Spanngurte 26 können auch andere Sicherungselemente verwendet werden. Sie sollten jedoch sogenannte Schnellspannverschlüsse sein. Ein solcher Schnellspannverschluß könnte auch beispielsweise ein federbelasteter Haken sein, der über einen Ansatz des Auto-Kindersitzes gelegt wird. Außerdem wäre es möglich, daß ein solcher Haken durch einen federbelasteten Sperriegel gesichert wird.

Die Adapter 16 sind an den Außenseiten mit Bügeln A ausgestattet, die zur Festsetzung mit dem aufgenommenen Auto-Kindersitz 23 in Schlitzen B der Halteschienen 22 eingreifen.

Die Erfindung ist nicht auf das dargestellte Ausführungsbeispiel beschränkt. Wesentlich ist, daß ein in seiner Bauform nicht genau festgelegter Auto-Kindersitz einfach, schnell und sicher am Untergestell 11 des Kinderwagen-Fahrgestells 10 festgelegt werden kann.

## Patentansprüche

1. Adapter für einen Auto-Kindersitz zur wahlweisen Verwendung des Auto-Kindersitzes außerhalb eines Kraftfahrzeuges, **gekennzeichnet durch** am Adapter (16) angeordnete Stützelemente (18, 19) für den Auto-Kindersitz (23) und durch Sicherungselemente (26) zum Anpressen des Auto-Kindersitzes (23) gegen die Stützelemente (18, 19);

2. Adapter nach Anspruch 1, **dadurch gekennzeichnet, daß** der Adapter (16) aus zwei Seitenteilen (17) und mindestens zwei die Seitenteile (17) verbindende und die Stützelemente bildende Querstangen (18, 19) besteht.

3. Adapter nach Anspruch 2, **dadurch gekennzeichnet, daß** die Seitenteile (17) an der oberen Seite mit bogenförmigen Ausnehmungen (20, 21) versehen sind.

4. Adapter nach Anspruch 1, dadurch gekennzeichnet, daß die Sicherungselemente Schnellspannverschlüsse (26) sind.

5. Adapter nach Anspruch 4, **dadurch gekennzeichnet, daß** die Schnellspannverschlüsse Spanngurte (26) mit Spannschlössern (25) sind.

6. Adapter nach einem oder mehreren der vorhergehenden Ansprüche 1 bis 5, **dadurch gekennzeichnet, daß** die Sicherungselemente bzw. die Schnellspannverschlüsse oder die Spanngurte (26) an den Seitenteilen (17) des Adapters (16) festgelegt sind.

7. Adapter nach einem oder mehreren der vorhergehenden Ansprüche 1 bis 6, **dadurch gekennzeichnet, daß** die Seitenteile (17) des Adapters (16) mit Aufnahmen für eine klappbares Verdeck, für einen Sonnenschirm oder für einen Windschutz oder dergleichen ausgestattet sind.

8. Adapter nach Anspruch 7, **dadurch gekennzeichnet, daß** die Aufnahmen vorzugsweise an den Außenseiten der Seitenteile (17) des Adapters (16) angeordnet sind.

9. Adapter nach einem oder mehreren der vorhergehenden Ansprüche 1-8, dadurch gekennzeichnet, daß die Seitenteile (17) des Adapters (16) an den beiden äußeren Seiten mit vorstehenden, mehrfach abgewinkelten Bügeln A versehen sind, die in Schlitze B der Halteschienen (22) eingreifen und gesichert sind.
